# EUROPÄISCHE PATENTANMELDUNG

(11) **EP 3 640 508 A1**
(43) Veröffentlichungstag der Anmeldung: **22.04.2020**
(21) Anmeldenummer: 18200304.6
(22) Anmeldetag: 15.10.2018
(51) Int. Cl.: F16K 1/54, F16K 31/06

(54) **MAGNETANKER FÜR ELEKTROMAGNETISCHES VENTIL**

(71) Anmelder: Carl Freudenberg KG, 69469 Weinheim (DE)
(72) Erfinder: MATESKOVIC, Ivan, 6341 Eichelwang (AT); KNOLL, Martin, 6342 Niederndorf (AT)

(57) **Zusammenfassung**

Die Erfindung betrifft einen Magnetanker (10) für ein elektromagnetisch betätigbares Ventil mit einem Magnetkern (1), einem mit dem Magnetkern (1) verbundenen Dichtkörper (2) und einer Feder (3), welche außenumfangseitig zum Magnetkern (1) positioniert ist. Erfindungsgemäß ist im Außenumfang des Magnetkerns (1) eine umlaufende Nut (4) eingebracht und der Magnetanker (10) besitzt einen Haltering (5) zum Halten der Feder (3), wobei der Haltering (5) außenumfangseitig zum Magnetkern (1) positioniert ist, eine Abstützfläche (5.1) für die Feder (3) besitzt und insbesondere mindestens ein Rastelement (5.2) aufweist, welches in die Nut (4) eingreift. Ein solcher Magnetanker (10) ist einfach aufgebaut und unkompliziert und kostengünstig montierbar.

## Beschreibung

Die Erfindung betrifft einen Magnetanker gemäß dem Oberbegriff von Anspruch 1, ein elektromagnetisches Ventil mit einem solchen Magnetanker gemäß Anspruch 12 und Verfahren zur Montage eines elektromagnetischen Ventils gemäß den Ansprüchen 13 bis 15.

### Stand der Technik

Aus dem Stand der Technik sind Magnetanker bekannt, welche in elektromagnetischen Ventilen zum Einsatz gelangen. Die Magnetanker werden durch entsprechende Ansteuerung von Elektromagneten gegen die Federkraft bewegt und bewirken ein Verschließen und Öffnen des Ventils.

Aus der DE 197 33 808 B4 ist ein Magnetanker bekannt, welcher als Rückstellelement eine Feder besitzt, wobei die Feder innerhalb eines hohlen Magnetkerns angeordnet ist. Auch bekannt sind alternative Ausführungen, bei welchen die Feder den Magnetkern umgibt.

Zur Federpositionierung an den Magnetanker dient bei der Ausführung mit den Magnetkern umgebender Feder entweder ein breiterer Querschnitt oder zwei unterschiedliche Durchmesser des Magnetkerns um einen Federpositionierungsraum zwischen dem Magnetanker und dem Ventilgehäuse zu bilden. Die Rückstellfeder wird bei der Montage des Magnetventils über einen größeren Außendurchmesser des Magnetankers aufgezogen und so auf die Federpositionsstelle montiert. Dazu muss die Feder mit einem Spezialwerkzeug aufgedehnt werden. Falls ein Magnetanker ohne Federbegrenzung konzipiert ist, wird die Feder über die unterschiedlichen Durchmessern des Magnetankers und des Ventilgehäuses an der richtigen Stelle positioniert.

Nachteilig dabei ist, dass die Feder zur Montage aufgedehnt und danach wieder an der Position einkalibriert werden muss. Durch diese Fertigungseinflüße wird die Position und die Vorspannung der Feder ungenau, was sich auf die Schaltcharakteristik des Magnetventils auswirkt.

Das Vorsehen der unterschiedlichen Durchmesser des Magnetkerns ist fertigungstechnisch aufwändig.

### Aufgabenstellung

Aufgabe der vorliegenden Erfindung ist es einen Magnetanker zu schaffen, der einfacher aufgebaut und kostengünstiger montierbar ist und die Nachteile des Standes der Technik zumindest teilweise behebt.

### Technische Lösung

Gelöst wird diese Aufgabe durch einen Magnetanker mit den Merkmalen von Anspruch 1.

Der erfindungsgemäße Magnetanker für ein elektromagnetisch betätigbares Ventil besitzt einen, insbesondere zylindrischen, Magnetkern, einen mit dem Magnetkern verbundenen Dichtkörper, zum Beispiel eine stirnseitig in den Magnetkern integrierte Dichtmasse, und eine Feder zur Erzeugung einer der Magnetkraft entgegengesetzten Federkraft zum Rückstellen des Magnetankers. Die Feder ist außenumfangseitig zum Magnetkern positioniert, d. h. die Feder umgibt den Magnetkern zumindest teilweise und ist zwischen dem Magnetkern und einem Ventilgehäuse angeordnet. Erfindungsgemäß ist in den Außenumfang des Magnetkerns eine umlaufende Nut, d.h. eine umlaufende Vertiefung eingebracht. Die Nut befindet sich insbesondere am oberen Ende des Magnetkerns, d.h. auf der Seite des Magnetkerns, auf welcher sich Dichtkörper und Ventilsitz befinden, etwa in Höhe des Endes der Feder. Der Magnetanker besitzt weiter einen Haltering zum Halten der Feder in einem Federpositionierungsraum zwischen dem Magnetkern und einem Ventilgehäuse, wobei der Haltering außenumfangseitig zum Magnetkern positioniert ist. D. h. der Haltering umgibt den Magnetkern und ist zwischen dem Magnetkern und einem Ventilgehäuse angeordnet. Der Haltering besitzt eine Abstützfläche für die Feder und greift in die Nut ein. Insbesondere ist mindestens ein Rastelement vorgesehen, welches nach dem Aufschieben des Halterings auf den Magnetkern in die umlaufwende Nut eingreift, d. h. in der Nut einrastet. Der Haltering kann beispielsweise als Ring ausgeführt sein.

In alternativer Ausgestaltung kann der Haltering durch Deformation, also durch mechanische Umformung in Eingriff mit der Nut gebracht und ein sicherer Sitz des Halterings bewirkt werden. Vorteil der mechanischen Umformung ist, dass die Position der Abstützfläche einfach angepasst und so die Federvorspannung eingestellt werden kann. So können in vorteilhafter Weise Federn aus einem Baukasten mit einer bestimmten Abstufung verwendet werden, wobei durch die Positionierung der Abstützfläche eine freie Gestaltung der Federcharakteristik erreicht werden kann.

Bei einem derartigen Magnetanker wird die Feder in vorteilhafter Weise sicher gehalten und bei der Montage nicht beeinträchtigt. Durch die Verwendung eines solchen Magnetankers für ein elektromagnetisch betätigbares Ventil kann das Ventil einfacher und kostengünstiger mit einer sehr exakt festlegbaren Schaltcharakteristik gefertigt werden.

In einer besonders vorteilhaften und daher bevorzugten Weiterbildung kann das Rastelement des Halterings durch einen, insbesondere kreisförmigen, scheibenförmigen Ring gebildet werden. Der Ring kann an mindestens einer Stelle unterbrochen sein, d. h. eine geschlitzte Ausführung aufweisen, so dass für das Aufdehnen des Rings beim Einrastprozess keine hohen Kräfte aufgebracht werden müssen, kein Spezialwerkzeug verwendet werden muss und eine Beschädigung des Halterings vermieden wird. Der Haltering kann also beispielsweise als geschlitzter Ring ausgeführt sein.

In einer möglichen Ausführungsform wird das Rastelement des Halterings durch eine Mehrzahl von Rastnasen gebildet. Diese können insbesondere gleichmäßig über den Umfang des Halterings verteilt sein.

In einer vorteilhaften Weiterbildung des erfindungsgemäßen Magnetankers weist der Haltering im Querschnitt seines Profils eine T-Form oder eine L-Form auf, wobei ein Schenkel des T oder des L in die Nut eingreift. Eine derartige Ausgestaltung des Halterings erlaubt eine einfache, kostengünstige Herstellung, zum Beispiel als Spritzgußteil, bei gleichzeitig guter Stabilität des Halterings.

In Weiterbildung des Magnetankers kann der Haltering aus Kunststoff, insbesondere aus Polyamid, oder aus Metall, insbesondere aus Federstahl, gefertigt sein.

In vorteilhafter Weiterbildung des Magnetankers ist dessen Feder als Spiralfeder ausgebildet.

Es wurde als vorteilhaft erkannt, den Dichtkörper durch eine in eine Vertiefung an der Stirnseite des Magnetkerns einvulkanisierte Dichtmasse auszubilden. Für den Dichtkörper kann ein Elastomer oder ein thermoplastisches Elastomer (TPE) oder PTFE (Polytetrafluorethylen) verwendet werden.

Bevorzugt sind der Dichtkörper und der Magnetanker adhäsiv verbunden. Der Dichtkörper kann beispielsweise mit dem Magnetanker vulkanisiert sein. Nach einer anderen Ausgestaltung besteht die Möglichkeit, den Dichtkörper in die Ausnehmung einzufügen, z.B. einzukleben oder mittels mechanischer Fixierung, insbesondere einer Verbördelung, zu montieren oder durch Vorsehen eines Hinterschnittes am Magnetkern, sodass ein Einrasten in den Hinterschnitt ermöglicht wird.

Der Dichtkörper kann aus einem elastomeren Werkstoff bestehen und scheibenförmig ausgebildet sein. Der Materialbedarf zur Herstellung des Dichtkörpers ist daher auf ein Minimum begrenzt.

Die Erfindung betrifft auch ein elektromagnetisches Ventil mit einem Ventilgehäuse, mit einem in dem Ventilgehäuse aufgenommenen Magnetanker wie obenstehend beschrieben und einem Elektromagneten, zum Bewegen des Magnetankers im Ventilgehäuse und damit zum Öffnen und Schließen des Ventils.

In Abhängigkeit von der Ausgestaltung des Ventils, insbesondere der Feder und deren Anordnung, besteht die Möglichkeit, dass der Magnetanker bei Strombeaufschlagung des Elektromagneten gegen die Federkraft in Offenstellung überführt wird. Wird demgegenüber die Strombeaufschlagung des Elektromagneten unterbrochen, wird der Dichtkörper durch die Federkraft dichtend an den Ventilsitz angelegt.

Generell besteht auch die Möglichkeit, dass der Magnetanker bei Strombeaufschlagung in Geschlossenstellung des Ventils und bei Unterbrechung des Stroms durch eine Feder in Offenstellung des Ventils überführt wird.

Die Erfindung betrifft auch ein Verfahren zur Montage eines wie oben stehend beschriebenen elektromagnetischen Ventils mit folgenden Schritten:
- Aufschieben der Feder auf den Magnetkern
- Aufschieben des Halterings auf den Magnetkern
- Einrasten des Halterings in die Nut
- Einschieben des Magnetkerns mit der Feder und dem Haltering in das Ventilgehäuse.

Ein alternatives Verfahren zur Montage eines elektromagnetischen Ventils erfolgt mit folgenden Schritten:
- Aufschieben des Halterings auf den Magnetkern
- Einrasten des Halterings in die Nut
- Einschieben der Feder in das Ventilgehäuse oder Aufschieben der Feder auf den Magnetkern
- Einschieben des Magnetkerns mit Haltering in das Ventilgehäuse.

Ein alternatives Verfahren zur Montage eines elektromagnetischen Ventils erfolgt mit folgenden Schritten:
- Aufschieben der Feder auf den Magnetkern
- Einschieben des Magnetkerns mit der Feder in das Ventilgehäuse.
- Aufschieben des Halterings auf den Magnetkern
- Einrasten des Halterings in die Nut

Durch derartige Verfahren zur Montage eines elektromagnetischen Ventils kann die Position der Feder und ihre Vorspannung genau festgelegt werden, was in vorteilhafter Weise eine genaue und vorherbstimmbare Schaltcharakteristik des Magnetventils bewirkt.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll an Hand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1a: eine erste Variante eines erfindungsgemäßen Magnetankers
- Fig. 1b: den Magnetanker aus Fig. 1a in einer detaillierteren Schnittdarstellung
- Fig. 1c: den Magnetanker aus Fig. 1a mit einer Darstellung der Luftführung
- Fig. 2a: eine zweite Variante eines erfindungsgemäßen Magnetankers
- Fig. 2b: den Magnetanker aus Fig. 2a in einer detaillierteren Schnittdarstellung
- Fig. 3: eine dritte Variante eines erfindungsgemäßen Magnetankers in einer detaillierteren Schnittdarstellung
- Fig. 4: eine vierte Variante eines erfindungsgemäßen Magnetankers in einer detaillierteren Schnittdarstellung

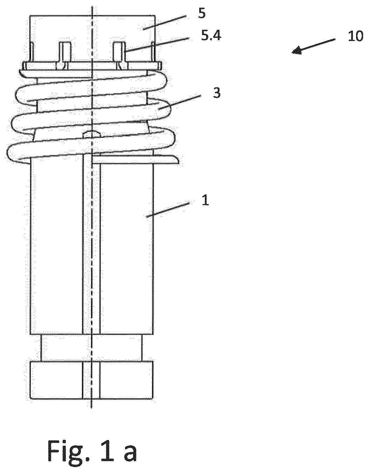

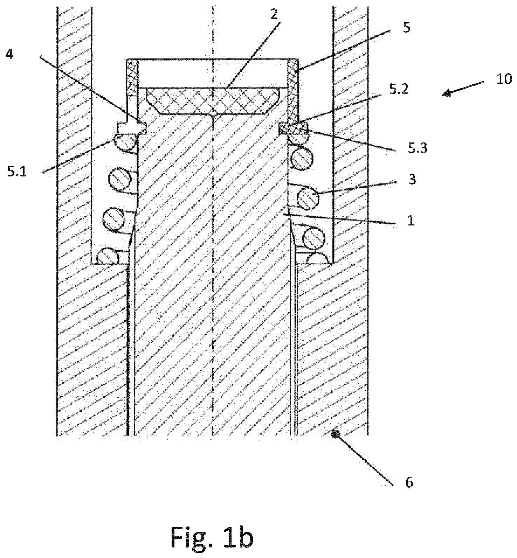

In den Figuren 1a und 1b ist eine erste Ausführungsvariante eines Magnetankers 10 dargestellt. Der Magentanker 10 dient der Verwendung in einem elektromagnetisch betätigbaren Ventil. Der Magnetanker 10 besitzt einen Magnetkern 1, welcher an seinem stirnseitigen Ende einen Dichtkörper 2 besitzt. Der Dichtkörper 2 ist in eine Ausnehmung in dem Magnetkern 1 eingefügt und kann beispielsweise aus einem Elastomer gefertigt sein. Der Dichtkörper 2 bildet mit einem hier nicht dargestellten Gegenelement den Ventilsitz.

Außenumfangseitig zum Magnetkern 1 ist eine Feder 3 positioniert, so dass die Feder 3 den Magnetkern 1 zumindest teilweise umgibt. Die Windungen der spiralförmigen Feder 3 verlaufen um den Magnetkern 1 herum. Die Feder 3 dient der Erzeugung einer der Magnetkraft entgegengesetzten Rückstellkraft zum Rückstellen des Magnetankers 10. Die Feder 3 befindet sich in einem Federpositionierungsraum zwischen dem Magnetkern 1 und einem nicht näher dargestellten Ventilgehäuse 6. Mit ihrem unteren Ende liegt die Feder 3 an dem Ventilgehäuse 6 an und stützt sich an diesem ab. Mit ihrem oberen Ende liegt die Feder 3 an einem Haltering 5 an und stützt sich gegen diesen ab. Dazu ist am Haltering 5 eine Abstützfläche 5.1 vorgesehen.

Der Haltering 5 besitzt eine geschlitzte Ausführung mit Unterbrechungen 5.4, so dass der Haltering 5 leicht aufgedehnt werden kann, wenn er auf den Magnetkern 1 aufgeschoben wird. Zur einfachen Befestigung des Halterings 5 an den Magnetkern 1 ist der Magnetkern 1 mit einer außenumfangsseitigen, umlaufenden Nut 4 versehen. Ein Rastelement 5.2 des Halterings 5 greift in die Nut 4 ein, sodass der Haltering 5 sicher und definiert am Magnetkern 1 positioniert ist. Als Rastelement 5.2 des Halterings 5 ist ein scheibenförmiger Ring 5.3 vorgesehen, wobei der Ring 5.3 geschlitzt ist und Unterbrechungen 5.4 aufweist. Der Haltering 5 besitzt im Querschnitt seines Profils eine T-Form.

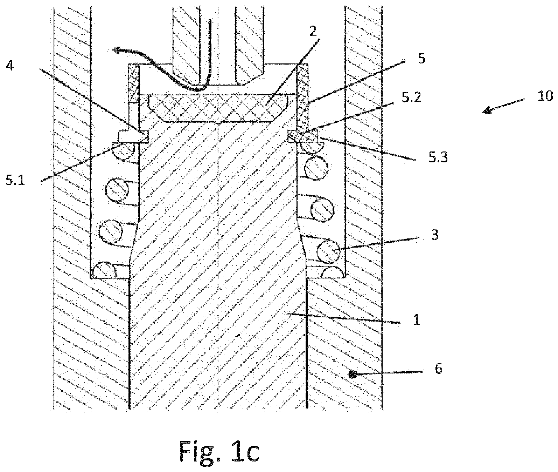

In Fig. 1c ist zusätzlich der Bereich des Ventils um den Ventilsitz genauer dargestellt, nämlich die Luftführung, welche durch einen Pfeil angedeutet ist. Dadurch, dass der Haltering 5 sich über die Höhe des Dichtkörpers 2 und des Ventilsitzes erstreckt, ergibt sich die Möglichkeit einer verbesserten Luftführung. Eine derart verbesserte Luftführung ist besonders vorteilhaft in Anwendungsfällen in welchen ein gelenkter Luftstrom zur Optimierung des Entlüftungsverhaltens beiträgt. In anderen Worten: die Schenkel des Halterings 5 sind besonders lang ausgeführt und über den Ventilsitz hinaus gezogen, was eine Brems- bzw. Drosselwirkung der Luftführung zur Folge hat.

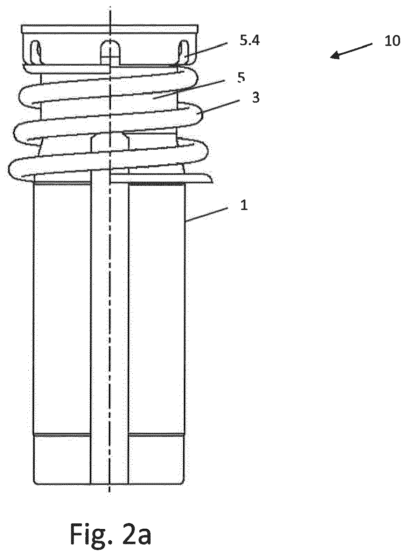

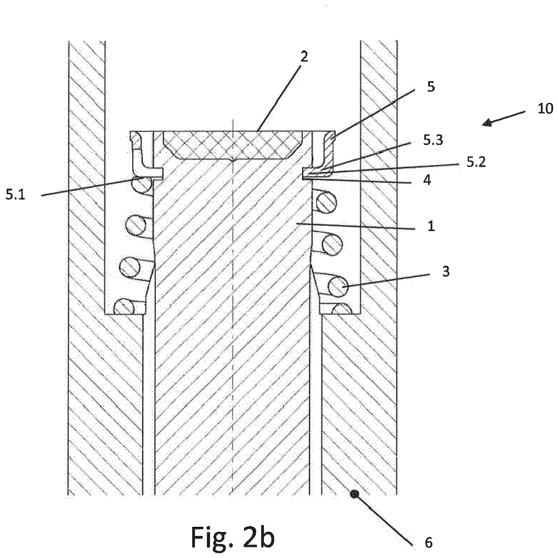

In den Figuren 2a und 2b ist eine ähnliche Ausführungsform des Magnetankers 10 dargestellt. Im Unterschied zur obenstehend beschriebenen Ausführungsform der Figuren 1a und 1b besitzt der Haltering 5 eine andere Ausgestaltung. Er weist ebenfalls eine Abstützfläche 5.1 für die Feder 3 auf, sowie Rastelemente 5.2, welche durch einen unterbrochenen scheibenförmigen Ring 5.3 gebildet werden. Der Querschnitt seines Profils weist jedoch eine L-Form auf, wobei der Schenkel des L in die Nut 4 eingreift.

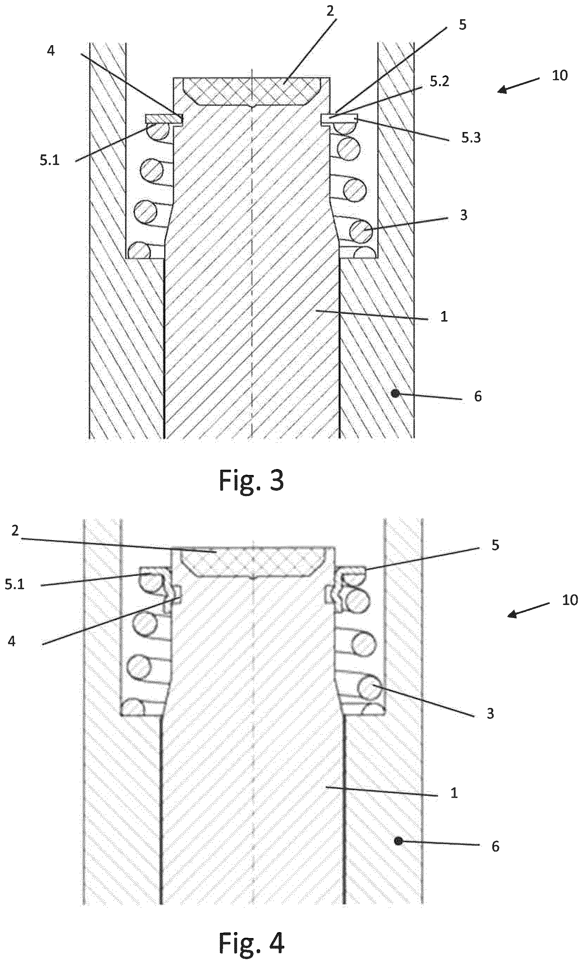

In Fig. 3 ist eine ähnliche Ausführungsform des Magnetankers 10 dargestellt. Im Unterschied zu den obenstehend beschriebenen Ausführungsformen der Figuren 1 und 2 besitzt der Haltering 5 eine andere Ausgestaltung. Er weist ebenfalls eine Abstützfläche 5.1 für die Feder 3 auf, sowie Rastelemente 5.2, welche durch einen unterbrochenen scheibenförmigen Ring 5.3 gebildet werden. Der Haltering 5 ist als flacher Sicherungsring ausgeführt.

In Fig. 4 ist eine alternative Ausführungsform des Magnetankers 10 dargestellt. Im Unterschied zu den obenstehend beschriebenen Ausführungsformen der Figuren 1, 2 und 3 besitzt der Haltering 5 eine andere Ausgestaltung. Er weist ebenfalls eine Abstützfläche 5.1 für die Feder 3 auf. An Stelle von Rastelementen wird eine andere Positionierung des Halterings 5 in der Nut 4 gewählt. Der Haltering 5 ist als Sicherungselement ausgeführt, welches mechanisch umgeformt wird und dabei in Eingriff mit der Nut 4 gelangt.

### Bezugszeichenliste

- 1: Magnetkern
- 2: Dichtkörper
- 3: Feder
- 4: Nut
- 5: Haltering
- 5.1: Abstützfläche
- 5.2: Rastelement
- 5.3: scheibenförmiger Ring
- 5.4: Unterbrechung
- 6: Position Ventilgehäuse

- 10: Magnetanker

## Patentansprüche

1. Magnetanker (10) für ein elektromagnetisch betätigbares Ventil mit einem Magnetkern (1), einem mit dem Magnetkern (1) verbundenen Dichtkörper (2) und einer Feder (3), welche außenumfangseitig zum Magnetkern (1) positioniert ist, **dadurch gekennzeichnet,**
**dass** im Außenumfang des Magnetkerns (1) eine umlaufende Nut (4) eingebracht ist und dass der Magnetanker (10) einen Haltering (5) zum Halten der Feder (3) besitzt, wobei der Haltering (5) außenumfangseitig zum Magnetkern (1) positioniert ist, eine Abstützfläche (5.1) für die Feder (3) besitzt und in die Nut (4) eingreift.

2. Magnetanker nach Anspruch 1, **dadurch gekennzeichnet,**
**dass** der Haltering (5) mindestens ein Rastelement (5.2) aufweist, welches in die Nut (4) eingreift.

3. Magnetanker nach Anspruch 2, **dadurch gekennzeichnet,**
**dass** das Rastelement (5.2) durch einen scheibenförmigen Ring (5.3) gebildet wird.

4. Magnetanker nach Anspruch 3, **dadurch gekennzeichnet,**
**dass** der scheibenförmige Ring (5.3) geschlitzt ausgeführt ist.

5. Magnetanker nach Anspruch 2, **dadurch gekennzeichnet,**
**dass** das Rastelement (5.2) durch eine Mehrzahl von Rastnasen gebildet wird.

6. Magnetanker nach einem der vorangehenden Ansprüche, **dadurch gekennzeichnet,**
**dass** der Haltering (5) im Querschnitt seines Profils eine T-Form oder eine L-Form aufweist.

7. Magnetanker nach einem der vorangehenden Ansprüche, **dadurch gekennzeichnet,**
**dass** der Haltering (5) aus Kunststoff, insbesondere aus Polyamid, oder aus Metall, insbesondere aus Federstahl, gefertigt ist.

8. Magnetanker nach einem der vorangehenden Ansprüche, **dadurch gekennzeichnet,**
**dass** die Feder (3) als Spiralfeder ausgebildet ist.

9. Magnetanker nach einem der vorangehenden Ansprüche, **dadurch gekennzeichnet,**
**dass** der Dichtkörper (2) durch eine in eine Vertiefung an der Stirnseite des Magnetkerns (1) eingebrachte Dichtmasse gebildet wird.

10. Magnetanker nach einem der vorangehenden Ansprüche, **dadurch gekennzeichnet,**
**dass** für den Dichtkörper (2) ein elastisches Material, insbesondere ein Elastomer verwendet wird.

11. Magnetanker nach einem der vorangehenden Ansprüche, **dadurch gekennzeichnet,**
**dass** der Haltering (5) lang ausgeführte Schenkel aufweist, welche sich über die Höhe des Dichtkörpers (2) hinaus erstrecken.

12. Elektromagnetisches Ventil mit einem Ventilgehäuse, einem in dem Ventilgehäuse aufgenommenen Magnetanker (10) nach einem der vorangehenden Ansprüche und einem Elektromagneten.

13. Verfahren zur Montage eines elektromagnetischen Ventils nach Anspruch 12 mit einem Magnetanker (10) nach Anspruch 2 bis 11 mit folgenden Schritten:
- Aufschieben der Feder (3) auf den Magnetkern (1)
- Aufschieben des Halterings (5) auf den Magnetkern (1)
- Einrasten des Halterings (5) in die Nut (4)
- Einschieben des Magnetkerns (1) mit der Feder (3) und dem Haltering in das Ventilgehäuse (6).

14. Verfahren zur Montage eines elektromagnetischen Ventils nach Anspruch 12 mit einem Magnetanker (10) nach Anspruch 2 bis 11 mit folgenden Schritten:
- Aufschieben des Halterings (5) auf den Magnetkern (1)
- Einrasten des Halterings (5) in die Nut (4)
- Einschieben der Feder (3) in das Ventilgehäuse oder Aufschieben der Feder (3) auf den Magnetkern (1)
- Einschieben des Magnetkerns (1) mit Haltering (5) in das Ventilgehäuse (6).

15. Verfahren zur Montage eines elektromagnetischen Ventils nach Anspruch 12 mit einem Magnetanker (10) nach Anspruch 2 bis 11 mit folgenden Schritten:
- Aufschieben der Feder (3) auf den Magnetkern (1)
- Einschieben des Magnetkerns (1) mit der Feder (3) in das Ventilgehäuse (6).
- Aufschieben des Halterings (5) auf den Magnetkern (1)
- Einrasten des Halterings (5) in die Nut (4)
